# EUROPEAN PATENT APPLICATION

(11) **EP 3 944 435 A1**
(43) Date of publication of application: **26.01.2022**
(21) Application number: 21184891.6
(22) Date of filing: 09.07.2021
(51) Int. Cl.: H02B 1/56, H02B 1/28, H02B 1/30

(54) **SWITCHGEAR WITH IMPROVED PROTECTION AGAINST WATER**

(30) Priority: 20.07.2020 GB 202011185
(71) Applicant: Eaton Intelligent Power Limited, Dublin 4 (IE)
(72) Inventor: GATTRINGER, Thomas, 3943 Schrems (AT)
(74) Representative: Eaton IP Group EMEA

(57) **Abstract**

A switchgear (1a.. 1c) is disclosed, which has a housing (2) with a top cover (3), wherein the top cover (3) comprises a base cover (4), a substantially vertical first wall (5) and a roof (6). The base cover (4) covers the housing (2) and has a first recess (R₁). The first wall (5) reaches upwards from or out of the edge of the first recess (R₁) and comprises a plurality of second recesses (R₂). The roof (6) extends over the first wall (5) in top view. The switchgear (1a..1c) moreover comprises a frame (7a, 7b), which surrounds the roof (6) and forms a third recess (R₃) in top view. A first virtual line (L1) between a first point (P₁) on the inner upper edge of the frame (7a, 7b) and a closest second point (P₂) on the lowest edge of the second recesses (R₂) runs through the roof (6).

## Description

### TECHNICAL FIELD

The invention relates to a switchgear, having a housing with a top cover, wherein the top cover comprises a base cover, a substantially vertical first wall and a roof. The base cover covers the housing and has a first recess, which is smaller than the outer contour of the housing in top view. The first wall reaches upwards from or out of the edge of the first recess, surrounds the first recess and comprises a plurality of second recesses. The roof extends over the first wall in top view.

### BACKGROUND ART

A switchgear of the type above generally is known in prior art. The first and the second recesses provide ventilation of the housing of the switchgear and thus heat dissipation and cooling. The roof provides protection against water. Those switchgears in principle are usable for outdoor installation, but also for installation in a building. In the latter case, the roof for example protects the interior of the housing from water coming from sprinkler systems. Often, the top cover is built in a way that it provides protection according to IPx2 of IEC standard 60529.

Unfortunately, it turned out that the way, in which the top covers of existing switchgears are designed, is not suitable in several cases and does not sufficiently protect the interior of a switchgear from water.

### DISCLOSURE OF INVENTION

Accordingly, an object of the invention is the provision of a switchgear with improved water protection. In particular, the solution shall be suitable for retrofitting existing switchgears without the need to rework the switchgears as such. Especially, the invention relates to switchgears, which in the original state already provide protection according to IPx2 of IEC standard 60529.

The object of the invention is solved by a frame surrounding the roof and forming a third recess in top view (wherein an annular free area is formed between the frame and the roof), wherein a first virtual line between a first point on the inner upper edge of the frame (or the outer edge of the third recess respectively) and a closest second point on the lowest edge of the second recesses runs through the roof.

By use of these measures, the water protection of the switchgear is improved because there is no way for water drops or water jets to directly get to the second recess. Instead, if a water drop or water jet reaches the second recess at all, it is reflected at a part of the switchgear (e.g. at the frame, the base cover and/or the roof) and thus its energy is decreased and in turn the risk that water gets into the housing of the switchgear is decreased.

Because the frame surrounds the roof and forms an annular free area between the frame and the roof, all installations on the top cover remain accessible. This particularly counts for eyelet bolts on the top of the housing which are used for lifting the switchgear. Hence, the proposed measures are well suited for retrofitting existing switchgears.

Another advantage is that an already existing protection provided by the top cover is not degraded by the frame, but instead it is improved. The same counts for ventilation and heat dissipation, which is not influenced or influenced just to a little and neglectable extent. So, certificates with regards to water protection, ventilation and heat dissipation (and thus to nominal power of the switchgear) are not influenced by the frame and need not be repeated. Hence, the proposed measures are well suited for retrofitting existing switchgears also from this viewpoint.

Finally, the frame does not interfere with cables, which are lead through the roof. So, the frame can be mounted to the housing without the need to switch off the switchgear, without the need to disconnect cables and without the need to switch off an upstream switch. In other words, this means the frame can be mounted under voltage. This is particularly true, when the switchgear in the original state already provides protection, for example according to IP2x, IP3x or IP4x of IEC standard 60529. So, tools, screws, bolts and the like cannot fall into the housing of the switchgear unintentionally. In the above context, the (unmounted) frame beneficially is not shaped like a closed ring, but is embodied as an open ring or is assembled in situ. For example, the frame may comprise four longitudinal parts, which are mounted to the housing and in the end form closed ring. Also two L-shaped parts are suitable as well of course. These measures support retrofitting existing switchgear, too.

In particular, the frame is attached to the outer side of the housing. In this way, there is no need to rework the housing of the switchgears. That is why this embodiment is particularly advantageous for retrofitting.

It is also advantageous, if the frame is detachably mounted to the housing of the switchgear. Hence, this embodiment is suitable for retrofitting as well. In particular, mounting can take place without the need of tools. For example, a snap-in connection can be provided between the frame and the housing of the switchgear. In particular, the frame can be mounted to the housing by means of eyelet bolts. In this way, the eyelet bolts provide multiple functions. On the one hand, they fix the frame to housing, on the other hand, they can be used to lift the switchgear by use of a crane. It should be noted in this context, that eyelet bolts are usually mounted by hand without the need of tools.

Especially, switchgears can be retrofitted, which provide protection according to IPx2 of IEC standard 60529 without the frame. IPx2 means that water coming in an angular range of ±15° from above may not get into the housing of the switchgear.

Generally, the frame can overlap the roof above the same in top view (case a). In this case, the third recess is smaller than the roof in top view. But it is possible as well that the frame does not overlap the roof above the same in top view (case b). In this case, the third recess is larger than the roof in top view. In other words, the frame, and more particularly its inner upper edge, is arranged at a distance from the roof and above the same in top view.

It is of advantage, if a first angle between a vertical line and a second virtual line connecting the first point on the inner upper edge of the frame and a closest third point on the outer edge of the roof is smaller than 60°. Hence, the frame is operational in the range of IPx3 of IEC standard 60529. IPx3 means that water coming in an angular range of ±60° from above may not get into the housing of the switchgear. In case a) any first angle above 60° narrows the third recess out of the testing range for IPx3 and possibly reduces ventilation of the switchgear in an unwanted way. In case b) any first angle above 60° is out of the testing range for IPx3 as well. So, the disclosed range for the first angle is particularly suitable if switchgears having a low IP protection (e.g. IPx2) shall be upgraded to IPx3.

In another advantageous embodiment of the switchgear, a second angle between a vertical line and a third virtual line connecting said third point on the outer edge of the roof and a closest second point on the lowest edge of the second recesses is larger than 15°. Hence, the roof is operational in the range of IPx2 of IEC standard 60529.

Furthermore it is advantageous, if the first angle is larger than 15° in case a) and if the first angle is smaller than 15° in case b). In case a), there is no water jet within the angular range of IPx2 which directly reaches the roof. This is particularly useful if existing switchgears without protection are retrofitted with the frame to obtain IPx2 protection. In case b), the frame is operational in the angular range of IPx2. In both cases, a very good protection against water is provided. This is particularly useful if existing switchgears having an existing IPx2 protection are retrofitted with the frame to obtain IPx3 protection because water out of the IPx2 range (±15°) is kept away by the frame. In turn, the protection class of the switchgear can be raised from IPx2 to IPx3 or even a higher class just by adding the frame. In both cases a) and b), a very good protection against water is provided.

In yet another advantageous embodiment of the switchgear, the first angle is smaller than the second angle, what also means that the first virtual line runs through the roof and provides a safety margin. In principle, it is sufficient in case b) if the first angle α is smaller than 15° or the second angle β is larger than 15° to achieve at least IPx2. But, of course, it is also possible that the first angle α is smaller than 15° and the second angle β is larger than 15°.

Beneficially, the frame comprises a substantially vertical second wall, wherein said inner upper edge is situated on said second wall. In this way, the frame has a simple shape and is easy to produce.

Alternatively, the frame beneficially can comprise a substantially vertical second wall and a frame cover reaching inwards thereof, wherein said inner upper edge is situated on said frame cover. In this way, the second recesses can be protected from water in a better way.

It is very advantageous, if a mesh is arranged in the third recess and/or between the frame and the roof, in particular between the inner upper edge of the frame and the outer edge of the roof. In this way, water drops or water jets are deflected at the mesh and thus their energy and the risk that they get into the housing of the switchgear is reduced. In particular, there is less reflection of water drops or jets hitting rigid surfaces or even worse water puddles because of the mesh. A mesh between the inner upper edge of the frame and the outer edge of the roof in particular is shaped like a funnel. But, a mesh between the frame and the roof can also be shaped as a (flat) ring. Beneficially, the mesh can be made of aluminum or plastics.

In yet another advantageous embodiment of the switchgear, the frame comprises fourth recesses on the lower outer edge. So, water entering the third recess can drain away.

### BRIEF DESCRIPTION OF DRAWINGS

The invention now is described in more detail hereinafter with reference to particular embodiments, which the invention however is not limited to.
- Fig. 1: shows an oblique view of a first embodiment of a switchgear;
- Fig. 2: shows a cross sectional and more detailed view of the upper part of the switchgear of Fig. 1;
- Fig. 3: shows a cross sectional and even more detailed view of the upper left part of the switchgear of Fig. 1;
- Fig. 4: shows a second embodiment of a switchgear with a frame overlapping the roof in top view and
- Fig. 5: shows further embodiments of switchgears with a mesh arranged in the third recess or between the frame and the roof.

### DETAILED DESCRIPTION

Generally, same parts or similar parts are denoted with the same/similar names and reference signs. The features disclosed in the description apply to parts with the same/similar names respectively reference signs. Indicating the orientation and relative position (up, down, sideward, etc) is related to the associated figure, and indication of the orientation and/or relative position has to be amended in different figures accordingly as the case may be.

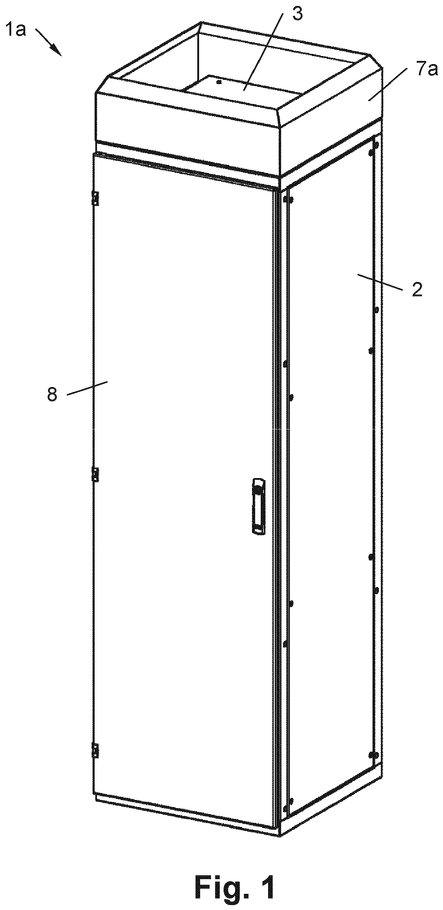

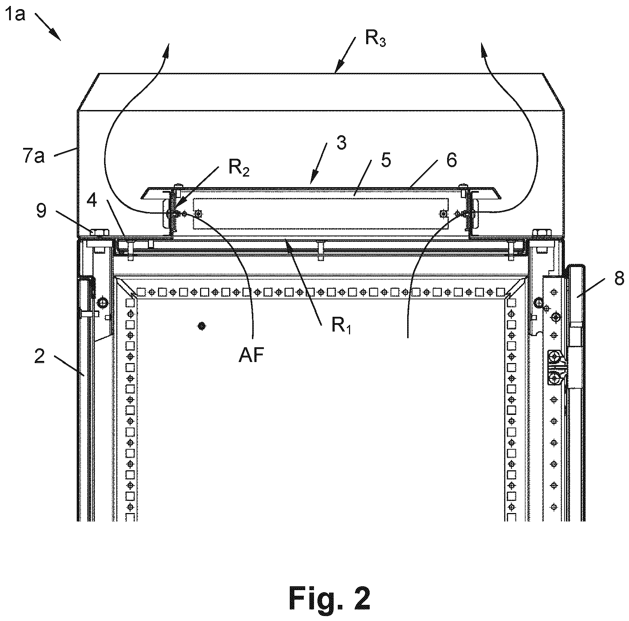

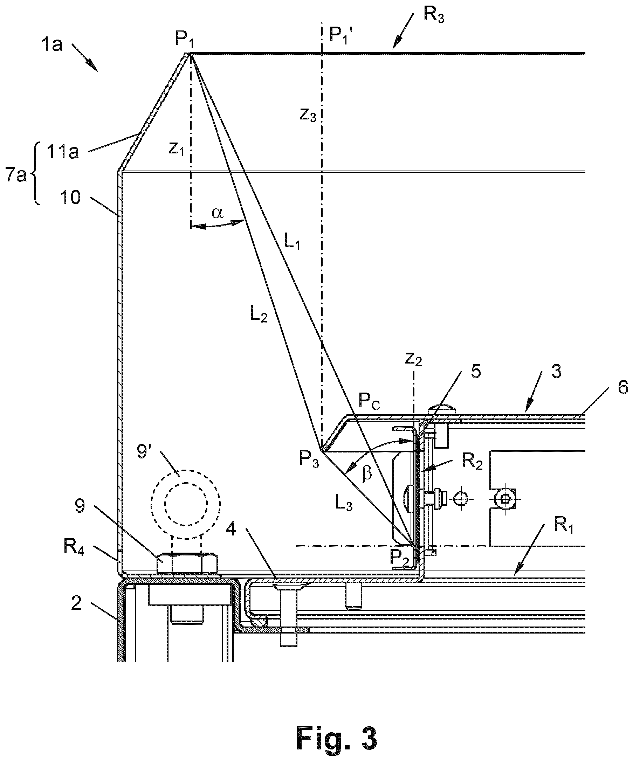

The invention is explained in more detail by use of Figs. 1 to 3, which show different views of a first embodiment of a switchgear 1a. Fig. 1 shows an oblique view of the switchgear 1a, Fig. 2 shows a cross sectional and more detailed view of the upper part of the switchgear 1a, and Fig. 3 shows a cross sectional and even more detailed view of the upper left part of the switchgear 1a.

The switchgear 1a comprises a housing 2 with a top cover 3, wherein the top cover 3 comprises a base cover 4, which covers the housing 2 and which has a first recess R₁, which is smaller than the outer contour of the housing 2 in top view. Additionally, the top cover 3 comprises a substantially vertical first wall 5, which reaches upwards from or out of the edge of the first recess R₁ and which surrounds the first recess R₁. The vertical first wall 5 also comprises a plurality of second recesses R₂. Moreover, the top cover 3 comprises a roof 6 extending over the first wall 5 in top view. Further on, the switchgear 1a comprises a frame 7a and also a door 8 to provide access to the installations within the switchgear 1a.

Beneficially, the frame 7a is attached to the outer side of the housing 2. In that, the frame 7a is particularly suited for retrofitting because a housing 2 of a switchgear 1a, which already exists, does not need to be modified. It is also advantageous, if the frame 7a is detachably mounted to the housing 2 of the switchgear 3. So it can easily be mounted and detached. In particular, mounting and detaching can take place without the need of tools. In the example shown in the Figs. 1 to 3, the frame 7a is mounted to the housing 2 by means of screws 9. However, also snap-in mounting is suitable as well. In a particularly advantageous embodiment, the frame 7a is mounted to the housing 2 by means of eyelet bolts 9'. In this way, the eyelet bolts 9' (which are shown in dashed lines in Fig. 3 and which replace the screws 9 then) provide multiple functions. On the one hand, they fix the frame 7a to housing 2, on the other hand, they can be used to lift the switchgear 1a by use of a crane.

Generally, the frame 7a surrounds the roof 6 and forms a third recess R₃ in top view. In that, an annular free area is formed between the frame 7a and the roof 6. In this example, the frame 7a comprises a substantially vertical second wall 10 and a frame cover 11a reaching inwards thereof. However, in principle the frame cover 11a may be omitted so that the frame 7a comprises just the substantially vertical second wall 10. As is visible in Fig. 3, the frame 7a beneficially comprises fourth recesses R₄ on the lower outer edge so that water entering the third recess R₃ can drain away. As can be seen in particular in Fig. 2, an air flow AF passes the first recess R₁, the second recesses R₂ and finally the third recess R₃. In that way, ventilation and cooling of the switchgear 1a is done.

The frame 7a is arranged in a way that a first virtual line L₁ between a first point P₁ on the inner upper edge of the frame 7a (or the outer edge of the third recess R₃ respectively) and a closest second point P₂ on the lowest edge of the second recesses R₂ runs through the roof 6. Fig. 3 indicates that there is a crossing point Pc between the first virtual line L₁ and the roof 6. In this example, the first point P₁ is arranged on the frame cover 11a. If the same is omitted, the first point P₁ would be arranged on the second wall 10.

Advantageously, and as it is the case in the Figs. 1 to 3, the third recess R₃ is larger than the roof 6 in top view (and thus the frame 7a does not overlap the roof 6 in top view). Moreover, a first angle α between a vertical line z₁ and a second virtual line L₂ connecting the first point P₁ on the inner upper edge of the frame 7a and a closest third point P₃ on the outer edge of the roof 6 is smaller than 60°. Accordingly, the frame 7a is operational in the range of IPx3.

Moreover it is advantageous, if a second angle β between a vertical line z₂ and a third virtual line L₃ connecting said third point P₃ on the outer edge of the roof 6 and a closest second point P₂ on the lowest edge of the second recesses R₂ is larger than the first angle α, what basically also means that the first virtual line L₁ runs through the roof 6.

In yet another advantageous embodiment of the switchgear 1a, the first angle α is smaller than 15°. Accordingly, the frame 7a is operational in the range of IPx2. This is particularly useful if existing switchgears 1a having an existing IPx2 protection are retrofitted with the frame 7a to obtain IPx3 protection because water out of the IPx2 range (±15°) is kept away by the frame 7a. In turn, the protection class of the switchgear can be raised from IPx2 to IPx3 or even a higher class just by adding the frame 7a.

Alternatively or in addition, the second angle β advantageously is larger than 15°. Accordingly, the roof 6 is operational in the range of IPx2. In principle, it is sufficient if the first angle α is smaller than 15° or the second angle β is larger than 15° to achieve at least IPx2. But, of course, it is also possible that the first angle α is smaller than 15° and the second angle β is larger than 15°.

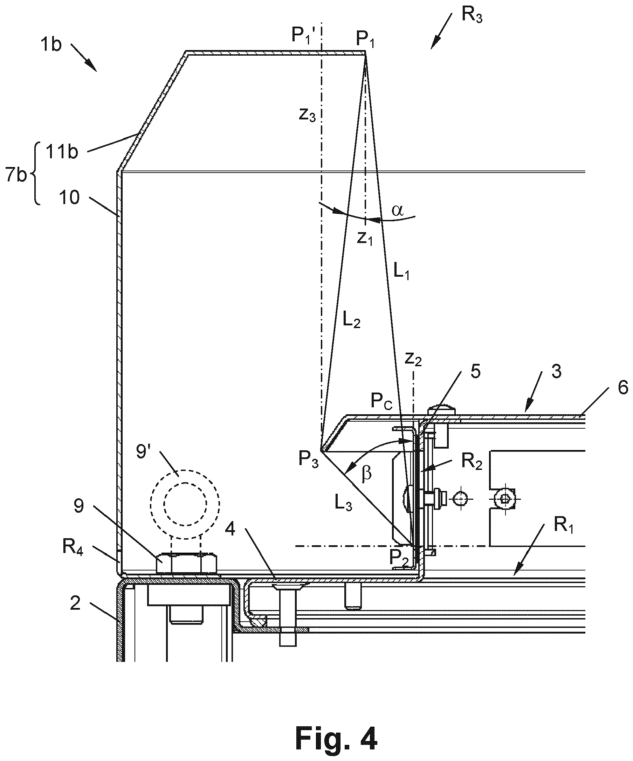

In the example shown in Figs. 1 to 3, the frame 7a does not overlap the roof 6 in top view. In this case, the third recess R₃ can be made large (larger than the roof 6 in top view) and there is just little influence on the air flow AF. However, this is not the only possibility, and the frame 7b can also overlap the roof 6 above the same in top view as this is depicted in Fig 4. In such a case, the third recess R₃ is smaller than the roof 6 in top view. Here, the frame cover 11b has a slanted portion and a horizontal portion. However, the frame cover 11b can also contain only a slanted portion or a horizontal portion.

Again, a first virtual line L₁ between a first point P₁ on the inner upper edge of the frame 7b and a closest second point P₂ on the lowest edge of the second recesses R₂ runs through the roof 6. Fig. 4 indicates that again there is a crossing point Pc. Beneficially, a first angle α between a vertical line z₁ and a second virtual line L₂ connecting the first point P₁ on the inner upper edge of the frame 7b and a closest third point P₃ on the outer edge of the roof 6 is smaller than 60°. Accordingly, the frame 7b is operational in the range of IPx3. Nevertheless, a first angle α above 60° is possible, but generally this is out of the testing range of IPx3.

Beneficially, the first angle α is larger than 15°. Accordingly, the frame 7b is operational in the range of IPx2. This is particularly useful if existing switchgears 1b without protection are retrofitted with the frame 7b to obtain IPx2 protection. Alternatively or in addition, again the second angle β advantageously is larger than 15°.

Generally, a vertical line z₃ reaching upwards from the third point P₃ or from the edge of the roof 6 defines an inner area (in Figs. 3 and 4 right of the shifted first point P₁') and an annular outer area (in Fig. 3 left of the shifted first point P₁'). If the frame 7b reaches over the shifted first point P₁' like this is the case in Fig. 4, then the frame 7b overlaps the roof 6 above the same in top view. If it does not, there is no overlap like it is in Figs. 1 to 3.

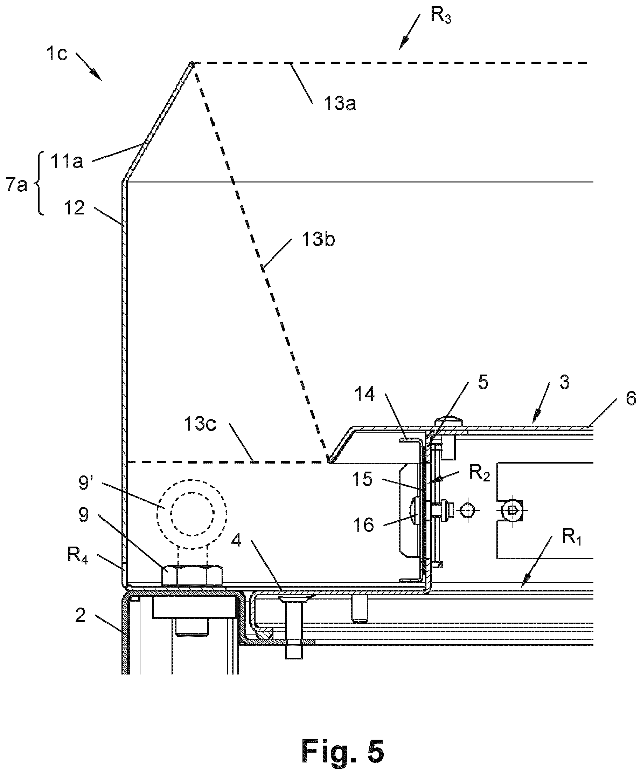

Fig. 5 finally shows an embodiment of a switchgear 1c, which comprises a mesh 13a.. 13c arranged in the third recess R₃ and/or between the frame 7a and the outer edge of the roof 6. In detail, the mesh 13a covers the whole third recess R₃, the mesh 13b is shaped like a funnel and is arranged in the annular space between the inner upper edge of the frame 7a and the outer edge of the roof 6, and the mesh 13c is shaped like a flat ring and is arranged between the wall 12 of the frame 7a and the outer edge of the roof 6. The mesh 13b and 13c generally has the advantage, that the roof 6 is accessible from above and in particular does not interfere with cables, which are lead through the roof 6. Beneficially, the mesh 13a..13c can be made of aluminum or plastics.

Generally, water drops or water jets are deflected at the mesh 13a.. 13c and thus their energy and thus the risk that they get into the housing 2 of the switchgear 1a.. 1c is reduced. In particular, there is less reflection of water drops or jets hitting rigid surfaces of the top case 3 or the frame 7a, 7b or even worse water puddles on the top case 3 because of the mesh 13a.. 13c.

In Fig. 5, moreover a holder 14, a second mesh 15 and screws 16 are denoted. The holder 14 is fixed to the first wall 5 by means of the screws 16, and thereby the second mesh 15 is clamped between the holder 14 and the first wall 5. The second mesh 15 covers the second recesses R₂ and hinders small animals to get into the housing 2 of the switchgear 1c. Of course, the use of a second mesh 15 is independent of the use of a first mesh 13a.. 13c and hence it can also be used in the switchgears 1a and 1b.

By use of the measures disclosed by way of the Figs. 1 to 5, the water protection of the switchgear 1a.. 1c is improved because there is no way for water drops or water jets to directly get to the second recess R₂. Instead, if a water drop or water jet reaches the second recess R₂ at all, is reflected at a part of the switchgear (e.g. at the frame 7a, 7b, the base cover 4 and/or the roof 6) before and thus its energy is decreased and in turn the risk that water gets into the housing 2 of the switchgear 1a.. 1c is decreased. Because the frame 7a, 7b surrounds the roof 6, an annular area between the frame 7a, 7b and the roof 6 is kept free, and also the roof 6 as such is kept free. Accordingly, all installations on the top cover 3 remain accessible. This particularly counts for eyelet bolts 9' on the top of the housing 2 which are used for lifting the switchgear 1a.. 1c. Another advantage is that an already existing protection provided by the top cover 3 is not degraded by the frame 7a, 7b, but it is improved instead. The same counts for ventilation as well as heat dissipation and cooling, which is not influenced or influenced by the frame 7a, 7b just to a little and neglectable extent. So, certificates with regards to water protection, ventilation and heat dissipation (and thus to nominal power of the switchgear 1a.. 1c) are not influenced by the frame 7a, 7b and need not to be repeated. Finally, the frame 7a, 7b does not interfere with cables, which are lead through the roof 6. So, the frame 7a, 7b can be mounted to the housing 2 without the need to switch off the switchgear 1a.. 1c, without the need to disconnect cables and without the need to switch off an upstream switch. In other words, this means the frame 7a, 7b can be mounted under voltage. This is particularly true, when the switchgear 1a.. 1c in the original state already provides protection, for example according to IP2x, IP3x or IP4x of IEC standard 60529. So, tools, screws, bolts and the like cannot fall into the housing 2 of the switchgear 1a.. 1c unintentionally. In the above context, the (unmounted) frame 7a, 7b beneficially is not shaped like a closed ring, but is embodied as an open ring or is assembled in situ. For example, the frame 7a, 7b may comprise four longitudinal parts, which are mounted to the housing 2 and in the end form closed ring. Also two L-shaped parts are suitable as well of course.

All in all, the proposed measures support retrofitting existing switchgears 1a..1c to improve their protection against water. In particular, an existing protection according to IPx2 of IEC standard 60529 can be raised to IPx3.

It is noted that the invention is not limited to the embodiments disclosed hereinbefore, but combinations of the different variants are possible. In reality, the switchgears 1a.. 1c may have more or less parts than shown in the figures. Moreover, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### LIST OF REFERENCE NUMERALS

- 1a..1c: switchgear
- 2: housing
- 3: top cover
- 4: base cover
- 5: first wall

- 6: roof
- 7a, 7b: frame
- 8: door
- 9: (hexagon) screw
- 9': eyelet bolt
- 10: second wall

- 11a, 11b: frame cover
- 13a.. 13c: first mesh
- 14: holder
- 15: second mesh
- 16: screw

- α: first angle
- β: second angle

- AF: air flow
- L1..L3: virtual line
- P1..P3: point
- Pc: crossing point
- R1..R4: recess
- z1..z3: vertical line

## Claims

1. Switchgear (1a..1c), having a housing (2) with a top cover (3), wherein the top cover (3) comprises
- a base cover (4), which covers the housing (2) and which has a first recess (R₁), which is smaller than the outer contour of the housing (2) in top view,
- a substantially vertical first wall (5), which reaches upwards from or out of the edge of the first recess (R₁) and which surrounds the first recess (R₁), wherein the first wall (5) comprises a plurality of second recesses (R₂), and
- a roof (6) extending over the first wall (5) in top view,
**characterized in**
- a frame (7a, 7b) surrounding the roof (6) and forming a third recess (R₃) in top view, wherein a first virtual line (L1) between a first point (P₁) on the inner upper edge of the frame (7a, 7b) and a closest second point (P₂) on the lowest edge of the second recesses (R₂) runs through the roof (6).

2. Switchgear (1a.. 1c) as claimed in claim 1, **characterized in that** a first angle (α) between a vertical line (z₁..z₃) and a second virtual line (L₂) connecting the first point (P₁) on the inner upper edge of the frame (7a, 7b) and a closest third point (P₃) on the outer edge of the roof (6) is smaller than 60°

3. Switchgear (1a.. 1c) as claimed in claim 1 or 2, **characterized in that** a second angle (β) between a vertical line (z₁..z₃) and a third virtual line (L₃) connecting said third point (P₃) on the outer edge of the roof (6) and a closest second point (P₂) on the lowest edge of the second recesses (R₂) is larger than 15°.

4. Switchgear (1a.. 1c) as claimed in any one of claims 1 to 3, **characterized in that** the frame (7a, 7b) overlaps the roof (6) above the same in top view.

5. Switchgear (1a.. 1c) as claimed in claim 4, **characterized in that** the first angle (α) is larger than 15°,

6. Switchgear (1a.. 1c) as claimed in any one of claims 1 to 3, **characterized in that** the frame (7a, 7b) does not overlap the roof (6) above the same in top view.

7. Switchgear (1a.. 1c) as claimed in claim 6, **characterized in that** the first angle (α) is smaller than 15°.

8. Switchgear (1a.. 1c) as claimed in claim 6 or 7, **characterized in that** a first angle (α) between a vertical line (z₁..z₃) and a second virtual line (L₂) connecting the first point (P₁) on the inner upper edge of the frame (7a, 7b) and a closest third point (P₃) on the outer edge of the roof (6) is smaller than a second angle (β) between a vertical line (z₁..z₃) and a third virtual line (L₃) connecting said third point (P₃) on the outer edge of the roof (6) and a closest second point (P₂) on the lowest edge of the second recesses (R₂).

9. Switchgear (1a.. 1c) as claimed in any one of claims 1 to 8, **characterized in that** the frame (7a, 7b) comprises a substantially vertical second wall (10), wherein said inner upper edge is situated on said second wall (10).

10. Switchgear (1a..1c) as claimed in any one of claims 1 to 8, **characterized in that** the frame (7a, 7b) comprises a substantially vertical second wall (10) and a frame cover (11a, 11b) reaching inwards thereof, wherein said inner upper edge is situated on said frame cover (11a, 11b).

11. Switchgear (1a..1c) as claimed in any one of claims 1 to 10, **characterized in that** a mesh (13a.. 13c) is arranged in the third recess (R₃) and/or between the frame (7a, 7b) and the roof (6).

12. Switchgear (1a..1c) as claimed in any one of claims 1 to 11, **characterized in that** the frame (7a, 7b) is attached to the outer side of the housing (2) of the switchgear (1a.. 1c).

13. Switchgear (1a..1c) as claimed in any one of claims 1 to 12, **characterized in that** the frame (7a, 7b) is detachably mounted to the housing (2) of the switchgear (1a.. 1c).

14. Switchgear (1a..1c) as claimed in any one of claims 1 to 13, **characterized in that** the frame (7a, 7b) is mounted to the housing (2) by means of eyelet bolts (9').

15. Switchgear (1a..1c) as claimed in any one of claims 1 to 14, **characterized in that** the frame (7a, 7b) comprises fourth recesses (R₄) on its lower outer edge.
